# EUROPEAN PATENT APPLICATION

(11) **EP 4 002 270 A1**
(43) Date of publication of application: **25.05.2022**
(21) Application number: 20843790.5
(22) Date of filing: 10.06.2020
(51) Int. Cl.: G06T 7/11

(54) **IMAGE RECOGNITION EVALUATION PROGRAM, IMAGE RECOGNITION EVALUATION METHOD, EVALUATION DEVICE, AND EVALUATION SYSTEM**

(30) Priority: 19.07.2019 JP 2019133589
(71) Applicant: Kyocera Corporation, Kyoto-shi Kyoto 612-8501 (JP)
(72) Inventor: SUGAHARA, Shun, Kyoto-shi, Kyoto 612-8501 (JP); TAGUCHI, Kensuke, Kyoto-shi, Kyoto 612-8501 (JP)
(74) Representative: Viering, Jentschura & Partner mbB Patent- und Rechtsanwälte
(86) International application number: PCT/JP2020/022928
(87) International publication number: WO 2021/014809

(57) **Abstract**

An image recognition evaluation program is executed by an evaluation apparatus for evaluating recognition accuracy of an image recognition apparatus performing image segmentation. The evaluation apparatus is caused to perform image processing on an input image to be input to the image recognition apparatus, and generate a plurality of processed input images. Thereafter, the evaluation apparatus is caused to input the generated plurality of processed input images to the image recognition apparatus, and obtain a plurality of output images classified into classes by image segmentation being performed by the image recognition apparatus. Next, the evaluation apparatus is caused to calculate a variance value of each of the plurality of the output images, based on the obtained plurality of output images.

## Description

### Technical Field

The present invention relates to an image recognition evaluation program, an image recognition evaluation method, an evaluation apparatus, and an evaluation system.

### Background Art

Semantic segmentation using a Fully Convolutional Network (FCN) is known as an image recognition technique (for example, see Non-Patent Document 1). Semantic segmentation performs classification (inference) in pixel units on a digital image input as an input image. In other words, the semantic segmentation classifies each pixel of the digital image, and labels each classified pixel with a category as an inference result, thereby dividing the digital image into image regions of a plurality of categories and outputting the digital image as an output image.

A technique called Bayesian SegNet is known as a technique for evaluating image recognition accuracy (for example, see Non-Patent Document 2). In Bayesian SegNet, an internal state of the Network is randomly oscillated using a technique called DropOut to calculate the fluctuation of the inference results. Then, in a case where the calculated inference results fluctuate significantly, the reliability level (recognition accuracy) is determined to be low, and in a case where the calculated inference results do not fluctuate, the reliability level (recognition accuracy) is determined to be high.

### Citation List

### Non-Patent Literature

Non-Patent Document 1: Hengshuang Zhao, et al. "Pyramid scene parsing network" IEEE Conf. on Computer Vision and Pattern Recognition (CVPR). 2017
Non-Patent Document 2: Alex Kendall, et al. "Bayesian SegNet: Model Uncertainty in Deep Convolutional Encoder-Decoder Architectures for Scene Understanding" arXiv: 1511.02680v2 [cs. CV], 10 Oct 2016

### Summary of Invention

### Technical Problem

In Non-Patent Document 2, since the internal state of the Network is randomly oscillated, change of the Network structure is necessary. Here, as the Network to be evaluated, there is a so-called Black Box Network in which the Network structure is black-boxed. In this case, while the change of the Network structure is assumed necessary in Non-Patent Document 2, the change cannot be performed on the Black Box Network. Thus, the method of Non-Patent Document 2 cannot be applied to the Black Box Network, and it is difficult to evaluate the recognition accuracy of the Network.

An object of the present invention is to provide an image recognition evaluation program, an image recognition evaluation method, an evaluation apparatus, and an evaluation system capable of evaluating the recognition accuracy of an image recognition apparatus even when the image recognition apparatus is black-boxed.

### Solution to Problem

An image recognition evaluation program according to one aspect is an image recognition evaluation program executed by an evaluation apparatus for evaluating recognition accuracy of an image recognition apparatus performing image segmentation, the program including causing the evaluation apparatus to perform image processing on an input image input to the image recognition apparatus, generate a plurality of processed input images, input the generated plurality of processed input images to the image recognition apparatus and obtain a plurality of output images classified into classes by image segmentation being performed by the image recognition apparatus, and calculate a variance value of each of the output images, based on the obtained plurality of output images.

An image recognition evaluation method according to one aspect is an image recognition evaluation method executed by an evaluation apparatus for evaluating recognition accuracy of an image recognition apparatus performing image segmentation, the method including performing image processing on an input image to be input to the image recognition apparatus and generating a plurality of processed input images, inputting the generated plurality of processed input images to the image recognition apparatus, performing image segmentation by the image recognition apparatus, obtaining a plurality of output images classified into classes, and calculating a variance value of each of the plurality of output images, based on the obtained plurality of output images.

An image recognition evaluation apparatus according to one aspect is an image recognition evaluation apparatus for evaluating recognition accuracy of an image recognition apparatus performing image segmentation, the apparatus including an input/output unit configured to input an input image to the image recognition apparatus and obtain an output image generated by the image recognition apparatus, and a controller configured to perform image processing on the input image to be input to the image recognition apparatus, generate a plurality of processed input images, input the generated plurality of processed input images to the image recognition apparatus, obtain a plurality of the output images classified into classes by image segmentation being performed by the image recognition apparatus, and calculate a variance value of each of the plurality of the output images, based on the obtained plurality of output images.

An evaluation system according to one aspect includes the evaluation apparatus described above, and the image recognition apparatus configured to perform image segmentation on the plurality of processed input images input from the evaluation apparatus, and output the plurality of output images classified into classes to the evaluation apparatus.

### Brief Description of Drawings

FIG. 1 is a diagram illustrating an outline of an evaluation system according to an embodiment.
FIG. 2 is a diagram illustrating an outline of functions during evaluation of the evaluation system according to the embodiment.
FIG. 3 is a diagram illustrating examples of an input image, a processed input image, and an output image.
FIG. 4 is a diagram illustrating an example of an image in which an input image and an output image are superimposed and a variance image.
FIG. 5 is a diagram illustrating an example of processing for evaluation of an image recognition apparatus.

### Description of Embodiments

A detailed description of an embodiment according to the present application is given while referencing the drawings. In the following description, like components may be assigned the same reference numerals. Redundant descriptions may be omitted. Matters that are not related to the description of the embodiments in accordance with the present application may be omitted from the description and illustrations.

### Embodiment

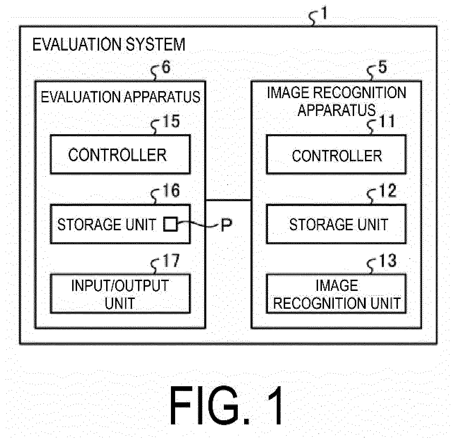

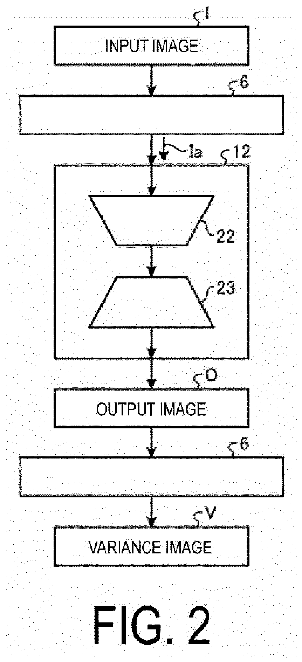

FIG. 1 is a diagram illustrating an outline of an evaluation system according to an embodiment. FIG. 2 is a diagram illustrating an outline of functions during evaluation of the evaluation system according to the embodiment. An evaluation system 1 is a system for evaluating the accuracy of image recognition by an image recognition apparatus 5, and includes the image recognition apparatus 5 to be evaluated, and an evaluation device 6 for evaluating the image recognition apparatus 5. In the evaluation system 1, the image recognition apparatus 5 and the evaluation apparatus 6 are connected to each other so as to be able to communicate data in both directions. Note that in the present embodiment, the evaluation system 1 is formed of the image recognition apparatus 5 and the evaluation apparatus 6 each being a separate body, but the configuration is not particularly limited thereto. The evaluation system 1 may be configured as a single apparatus in which the image recognition apparatus 5 and the evaluation apparatus 6 are integrated.

The image recognition apparatus 5 recognizes objects included in an input image I to be input, and outputs the recognized result as an output image O. A captured image captured by an imaging device such as a camera is input to the image recognition apparatus 5 as the input image I. Note that, as will be described in detail below, during evaluation, a processed input image Ia generated by the evaluation apparatus 6 is input to the image recognition apparatus 5.

The image recognition apparatus 5 performs image segmentation on the input image I. Image segmentation refers to labeling divided image regions of a digital image with classes, and is also referred to as class inference (classification). In other words, image segmentation refers to determining which class a divided predetermined image region of a digital image belongs to, and labeling an identifier (category) for identifying the class indicated by the image region, thereby dividing the image into regions of a plurality of categories. The image recognition apparatus 5 outputs, as the output image O, an image obtained by performing image segmentation (class inference) on the input image I.

The image recognition apparatus 5 is provided in, for example, an onboard recognition camera of a vehicle. The onboard recognition camera captures the driving status of the vehicle in real time at a predetermined frame rate, and inputs the captured image to the image recognition apparatus 5. The image recognition apparatus 5 obtains the captured image input at the predetermined frame rate as the input image I. The image recognition apparatus 5 classifies objects included in the input image I, and outputs the classified image at a predetermined frame rate as the output image O. Note that the image recognition apparatus 5 is not limited to being mounted on the onboard recognition camera, but may be provided in other devices.

The image recognition apparatus 5 includes a controller 11, a storage unit 12, and an image recognition unit 13. The storage unit 12 stores programs and data. The storage unit 12 may also be used as a work region for temporarily storing processing results of the controller 11. The storage unit 12 may include any storage device, such as a semiconductor storage device or a magnetic storage device. The storage unit 12 may include a plurality of types of storage devices. The storage unit 12 may include a combination of a portable storage medium such as a memory card and a device for reading the storage medium.

The controller 11 implements various functions by comprehensively controlling the operation of the image recognition apparatus 5. The controller 11 includes an integrated circuit such as a Central Processing Unit (CPU). Specifically, the controller 11 executes instructions included in a program stored in the storage unit 12 to control the image recognition unit 13 and the like, thereby implementing various functions. The controller 11, for example, executes a program related to image recognition, thereby executing image recognition by the image recognition unit 13.

The image recognition unit 13 includes an integrated circuit such as a Graphics Processing Unit (GPU). The image recognition unit 13 performs, for example, image segmentation using semantic segmentation. Semantic segmentation performs class inference for each pixel of the input image I, and labels each classified pixel with a category, thereby dividing the input image I into regions of a plurality of categories. When the input image I is input, the image recognition unit 13 performs image segmentation, thereby outputting an image, in which the input image I is classified for each pixel, as the output image O.

The image recognition unit 13 performs the image segmentation using a neural network (hereinafter, also simply referred to as a network), such as a Fully Convolutional Network (FCN), which is entirely composed of convolution layers. The image recognition unit 13 uses a learned network, which is, for example, a black-boxed network in which it is unclear what learning has been performed. The image recognition unit 13 includes an encoder 22 and a decoder 23.

The encoder 22 executes encoding processing on the input image I. The encoding processing is processing for executing down-sampling (also referred to as pooling) for decreasing the resolution of the feature map while generating a feature map in which a feature amount of the input image I has been extracted. Specifically, in the encoding processing, the processing is performed on the input image I in the convolution layer and the pooling layer. In the convolution layer, a kernel (filter) for extracting a feature amount of the input image I is moved with a predetermined stride in the input image I. Then, in the convolution layer, a convolution calculation for extracting the feature amount of the input image I is performed, based on the weight of the convolution layer, and a feature map in which the feature amount has been extracted by the convolution calculation is generated. The number of generated feature maps corresponds to the number of channels of a kernel. In the pooling layer, the feature map in which the feature amount has been extracted is reduced to generate a feature map having a low resolution. In the encoding processing, processing in the convolution layer and processing in the pooling layer are executed a plurality of times to generate a feature map having a down-sampled feature amount.

The decoder 23 executes decoding processing on the feature map after the encoding processing. The decoding processing is processing for executing up-sampling (also referred to as un-pooling) for increasing the resolution of the feature map. Specifically, in the decoding processing, processing is performed on the feature map in a reverse convolution layer and an un-pooling layer. In the un-pooling layer, the low-resolution feature map including the feature amount is magnified to generate a feature map having a high resolution. In the reverse convolution layer, a reverse convolutional calculation for restoring the feature amount included in the feature map is executed based on the weight of the reverse convolution layer, thereby generating a feature map by the calculation, the feature map restoring the feature amount. Then, in the decoding processing, processing in the un-pooling layer and processing in the reverse convolution layer are repeated a plurality of times to generate an output image O, which is an up-sampled and region-divided image. The output image O is up-sampled until the resolution thereof becomes equal to that of the input image I input to the image recognition unit 7.

As described above, the image recognition unit 13 executes the encoding processing and the decoding processing on the input image I, and performs the class inference (classification) in pixel units, thereby performing image segmentation of the input image I. Then, the image recognition unit 13 outputs an image obtained by dividing the input image I into regions by class as the output image O.

The evaluation apparatus 6 evaluates the recognition accuracy of the image recognition apparatus 5. The evaluation apparatus 6 processes the input image I to be input to the image recognition apparatus 5, and evaluates the recognition accuracy, based on the output image O output from the image recognition apparatus 5.

The evaluation apparatus 6 includes a controller 15, a storage unit 16, and an input/output unit 17. Note that the storage unit 16 has substantially the same configuration as the storage unit 12 of the image recognition apparatus 5, and thus description thereof is omitted.

The input/output unit 17 is an interface for inputting and outputting various types of data to and from the image recognition apparatus 5, the input/output unit 17 inputs the processed input image Ia being the input image I processed by the image recognition apparatus 5, and obtains the output image O generated by the image recognition apparatus 5.

The controller 15 comprehensively controls the operation of the evaluation apparatus 6 to implement various functions. The controller 15 includes an integrated circuit such as a Central Processing Unit (CPU). Specifically, the controller 15 executes instructions included in a program stored in the storage unit 16 and controls the input/output unit 17 and the like, thereby implementing various functions. The controller 15, for example, executes an image recognition evaluation program P related to the evaluation of the image recognition apparatus 5, thereby obtaining the output image O from the image recognition apparatus 5, and evaluates the recognition accuracy of the image recognition apparatus 5, based on the obtained output image O. The controller 15 executes the image recognition evaluation program P, thereby processing the input image I to be input to the image recognition apparatus 5, and generates the processed input image Ia.

As illustrated in FIG. 2, when the evaluation apparatus 6 obtains the input image I, the evaluation system 1 processes the input image I, generates the processed input image Ia, and inputs the generated processed input image Ia to the image recognition unit 13. The image recognition unit 13 executes the encoding processing and the decoding processing on the processed input image Ia, thereby performing image segmentation of the processed input image Ia. Then, the image recognition unit 13 outputs an image obtained by dividing the processed input image Ia into regions by class as the output image O to the evaluation apparatus 6. The evaluation apparatus 6 obtains the output image O, and generates a variance image V for evaluating the image recognition apparatus 5, based on the obtained output image O.

Note that in a case where the image recognition apparatus 5 and the evaluation device 6 are an integrated single device, the controller 11 and the controller 15 may be the same controller, and the storage unit 12 and the storage unit 16 may be the same storage unit.

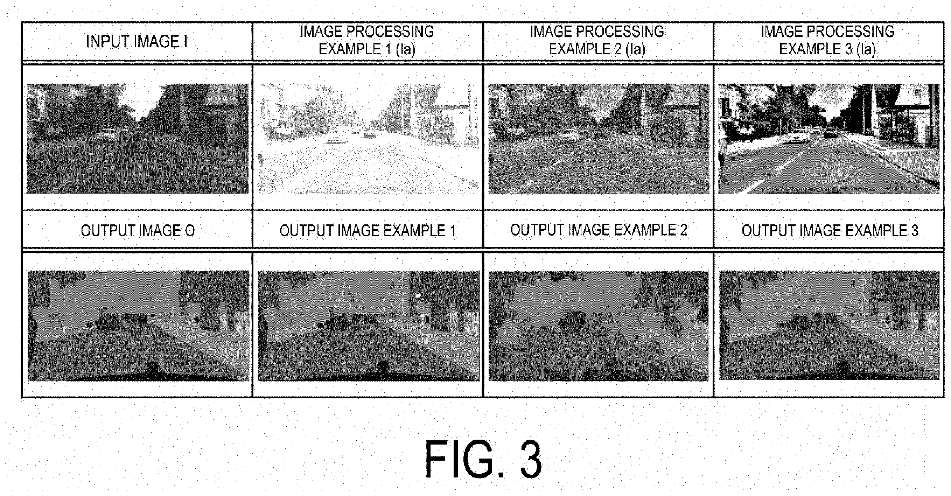

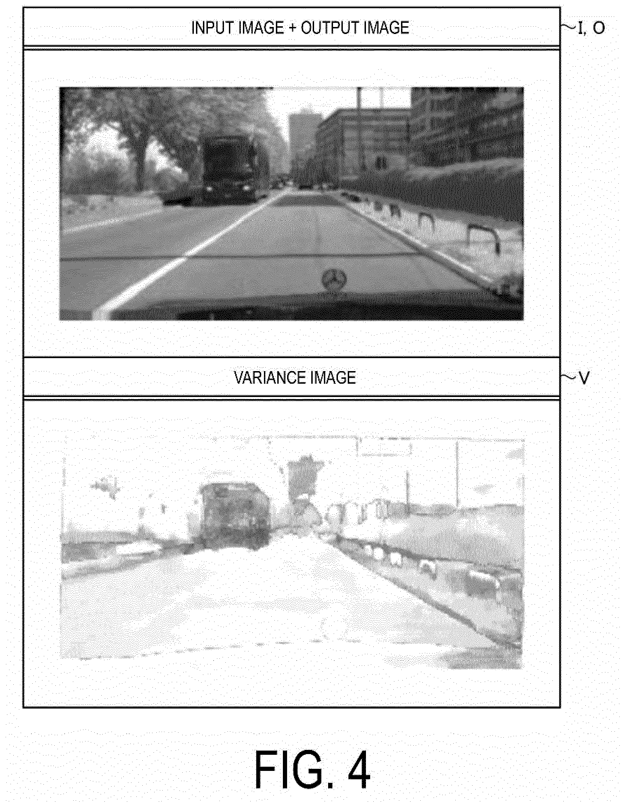

Next, the input image I, the processed input image la, the output image O, and the variance image V will be described with reference to FIG. 3 and FIG. 4. FIG. 3 is a diagram illustrating examples of an input image, a processed input image, and an output image. FIG. 4 is a diagram illustrating an example of an image in which an input image and an output image are superimposed and a variance image.

The input image I is a digital image composed of a plurality of pixels. The input image I is, for example, an image produced by an imaging element provided in an imaging device such as a camera or the like and having a resolution corresponding to the number of pixels of the imaging element. In other words, the input image I is an original master image having a high resolution, for which up-sampling processing for increasing the number of pixels of the image or down-sampling processing for decreasing the number of pixels of the image has not been performed.

The processed input image Ia is obtained by performing image processing on the input image I. In FIG. 3, image processing examples 1 to 3 are illustrated as processing examples of the processed input image Ia. Examples of the image processing include, for example, Perlin noise processing, Gaussian noise processing, gamma conversion processing, white balance processing, and blur processing. The processed input image Ia of the image processing example 1 is an image obtained by performing gamma conversion processing on the input image I. The processed input image Ia of the image processing example 2 is an image obtained by performing Gaussian noise processing on the input image I. The processed input image Ia of the image processing example 3 is an image obtained by performing white balance processing on the input image I.

The output image O is divided into regions by class. The class includes, for example, objects included in the input image I, such as a person, a vehicle, a road, and a building. The output image O is divided into regions by class by classifying each object in pixel units and labeling the class classified for the pixel units. In FIG. 3, the regions are classified into classes, such as a person, a vehicle, a road, and sky. The output image O is an output image O corresponding to the processed input image Ia. FIG. 4 illustrates the output image examples 1 to 3 corresponding to the processed input images Ia of the image processing examples 1 to 3. The output image O of the output image example 1 is an output image corresponding to the processed input image Ia of the image processing example 1. The output image O of the output image example 2 is an output image corresponding to the processed input image Ia of the image processing example 2. The output image O of the output image example 3 is an output image corresponding to the processed input image Ia of the image processing example 3. In the examples illustrated in FIG. 3, the output images O have decreased recognition accuracy in the output image examples 1 to 3. Note that the output images O in FIG. 3 are examples, and the examples are not particularly limited to these classifications. The output images O have the same resolution as that of the input image I.

In images illustrated in FIG. 4, an image on the upper side is an image in which the input image I and the output image O are superimposed, and an image on the lower side is the variance image V based on the input image I and the output image O. The variance image V is generated using a plurality of output images O which are generated by generating a plurality of processed input images Ia by performing image processing on the input image I and inputting the generated plurality of processed input images Ia to the image recognition apparatus 5. Here, when the variance image V is generated, a plurality of output images O corresponding to the plurality of processed input images Ia generated by changing the type of image processing may be used. Furthermore, when the variance image V is generated, a plurality of output images O corresponding to the plurality of processed input images Ia generated by randomly performing the image processing without changing the type of image processing may be used.

Specifically, the variance image V is obtained by visualizing a variance value for each pixel, based on the plurality of output images O. In the variance image V, a white image region has a low variance value, and a black image region has a high variance value. In other words, when classes for predetermined pixels of the plurality of output images O are dispersed, the variance values for the predetermined pixels of the variance image V are set to be high to form a black image region. On the other hand, when the classes for the predetermined pixels of the plurality of output images O are not dispersed, the variance values for the predetermined pixels of the variance image V are set to be low to form a white image region. As described above, the variance image V is an image in which a variance value is set for each pixel.

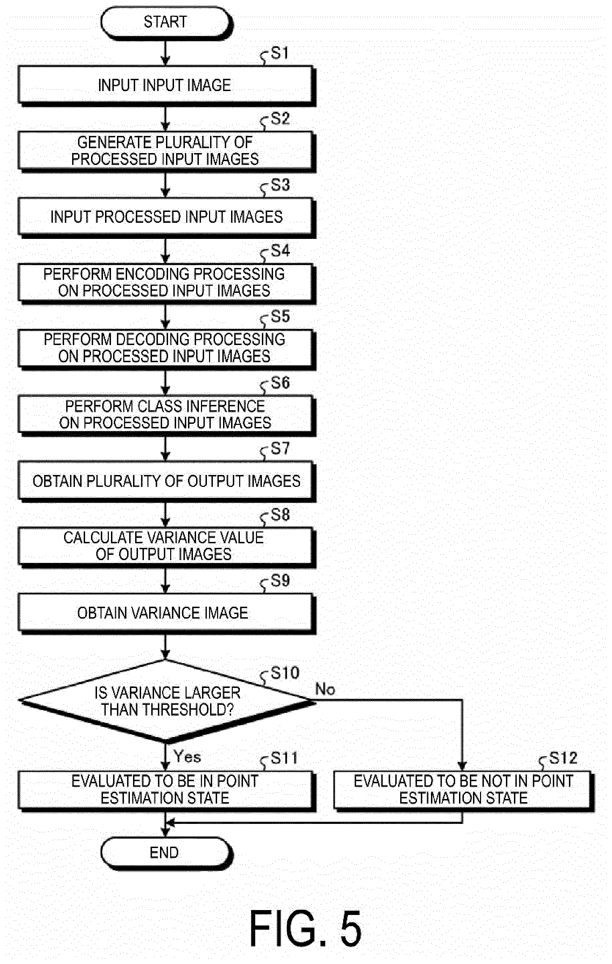

Next, a processing for evaluation of the image recognition apparatus 5 by the evaluation device 6 will be described with reference to FIG. 5. FIG. 5 is a diagram illustrating an example of processing for evaluation of an image recognition apparatus.

First, the input image I to be input to the image recognition apparatus 5 is input to the evaluation apparatus 6 (step S1). Then, the controller 11 of the evaluation apparatus 6 performs image processing on the input image I, thereby generating a plurality of processed input images Ia (step S2). In step S2, on the input image I, image processing of a predetermined type may be performed a plurality of times, thereby generating the plurality of processed input images la, or a plurality of different types of image processing may be performed, thereby generating the plurality of processed input images la, or both may be performed, thereby generating the plurality of processed input images Ia. In a case where image processing is performed on the input image I, the image processing is performed on the input image I at a processing degree within a preset perturbation range. Here, the perturbation range is a range in which an object captured in the input image I can be recognized even when the image processing is performed on the object.

Next, the evaluation apparatus 6 inputs the generated plurality of processed input images Ia to the image recognition apparatus 5 (step S3). When the processed input image Ia is input, the image recognition unit 13 executes encoding processing on the processed input image Ia (step S4). The image recognition unit 13 executes the encoding processing, thereby generating a feature map including a down-sampled feature amount. The image recognition unit 13 executes decoding processing on the feature map including the down-sampled feature amount (step S5). The image recognition unit 13 executes the decoding processing, thereby up-sampling the feature map including the feature amount while restoring the feature map, thereby making the feature map have the same resolution as that of the processed input image Ia. Then, the image recognition unit 13 executes class inference for dividing the image into regions by class in pixel units (step S6). The image recognition unit 13 generates the output image O as a result of the class inference, and outputs the generated output image O to the evaluation device 6, so that the evaluation device 6 obtains the output image O (step S7). Step S4 to step S6 are executed a plurality of times in accordance with the number of the processed input images Ia, and in step S7, a plurality of output images O corresponding to the plurality of processed input images Ia are obtained.

Next, the evaluation apparatus 6 calculates a variance value of the output image O, based on the obtained plurality of output images O (step S8). In step 8, a variance value of a class for each pixel is calculated using the plurality of output images O. Thereafter, the evaluation apparatus 6 generates and obtains a variance image V, based on the variance value of the class for each pixel (step S9).

Next, the evaluation device 6 determines whether the variance value of the output image O is larger than a preset threshold value (step S10). Here, the threshold value is a value for determining whether an estimation of the classification by the image recognition apparatus 5 is in a point estimation state. The point estimation state is a state in which, in the learning of the image recognition apparatus 5, learning with a low robustness is performed, and thus, at the time of the estimation of the image recognition apparatus 5, a peaky (sensitive) estimation is performed. Specifically, the point estimation state is a state in which, if the image recognition apparatus 5 learns using an image of only the front face of the object, the image recognition apparatus 5 can only estimate the object using an image of the front face of the object, and has difficulty estimating the object using an image of the back face of the object. In step S10, specifically, it is determined whether the variance value of the class of the output image O is larger than the preset threshold value, and it is determined whether the estimation is in the point estimation state for each class.

In a case where the variance value (of the class) of the output image O is larger than the threshold value (step S10: Yes), the evaluation apparatus 6 determines that the image recognition apparatus 5 is in the point estimation state (step S11). On the other hand, in a case where the variance value (of the class) of the output image O is not larger than the threshold value (step S10: No), the evaluation apparatus 6 determines that the image recognition apparatus 5 is not in the point estimation state (step S12).

As described above, in the evaluation of the image recognition apparatus 5 according to the embodiment, the input image I is perturbed by the image processing performed on the input image I, and the processed input image Ia, which is the perturbed input image I, is input to the image recognition apparatus 5, and the variance value of the output image O can be calculated. Thus, even when the image recognition apparatus is black-boxed, the input image I is perturbed and an evaluation based on the variance value is performed, so that the recognition accuracy of the image recognition apparatus 5 can be appropriately evaluated.

In the evaluation of the image recognition apparatus 5 according to the embodiment, since the variance value of the class for each pixel of the output image O can be calculated, the recognition accuracy of the image recognition apparatus 5 in class units can be appropriately evaluated.

In the evaluation of the image recognition apparatus 5 according to the embodiment, it is possible to appropriately determine whether the image recognition apparatus 5 is in the point estimation state by comparing the variance value of the output image O and the preset threshold value.

In the evaluation of the image recognition apparatus 5 according to the embodiment, various types of image processing such as Perlin noise processing, Gaussian noise processing, gamma conversion processing, white balance processing, and blur processing can be used. As a result, since various perturbations can be performed on the input image I, various recognition accuracy evaluations for the image recognition apparatus 5 can be performed.

Note that in the present embodiment, the image recognition apparatus 5 performs image segmentation using semantic segmentation, but the embodiment is not particularly limited to this configuration. Other neural networks may be used as the network used for image recognition.

### Reference Signs List

1 Evaluation system
5 Image recognition apparatus
6 Evaluation apparatus
11 Controller
12 Storage unit
13 Image recognition unit
15 Controller
16 Storage unit
17 Input/output unit
22 Encoder
23 Decoder
P Image recognition evaluation program
I Input image
Ia Processed input image
O Output image
V Variance image

## Claims

1. An image recognition evaluation program, the program being executed by an evaluation apparatus configured to evaluate recognition accuracy of an image recognition apparatus performing image segmentation, the program comprising:
causing the evaluation apparatus to
perform image processing on an input image to be input to the image recognition apparatus, and generate a plurality of processed input images,
input the generated plurality of processed input images to the image recognition apparatus and obtain a plurality of output images classified into classes by image segmentation being performed by the image recognition apparatus, and
calculate a variance value of each of the plurality of output images, based on the obtained plurality of output images.

2. The image recognition evaluation program according to claim 1, wherein
the variance value of each of the plurality of the output images is a variance value of a class corresponding to each pixel of the output image.

3. The image recognition evaluation program according to claim 2, wherein
a threshold value for determining whether an estimation of the classification by the image recognition apparatus is in a point estimation state is preset, and
the program further causes the evaluation apparatus to determine whether the estimation is in the point estimation state, based on the calculated variance value of each of the plurality of output images and the threshold value.

4. The image recognition evaluation program according to any one of claims 1 to 3, wherein
the image processing includes at least any one of Perlin noise processing, Gaussian noise processing, gamma conversion processing, white balance processing, and blur processing.

5. An image recognition evaluation method, the method being executed by an evaluation apparatus configured to evaluate recognition accuracy of an image recognition apparatus performing image segmentation, the method comprising:
performing image processing on an input image to be input to the image recognition apparatus, and generating a plurality of processed input images,
inputting the generated plurality of processed input images to the image recognition apparatus, performing image segmentation by the image recognition apparatus, and obtaining a plurality of output images classified into classes, and
calculating a variance value of each of the plurality of output images, based on the obtained plurality of output images.

6. An evaluation apparatus, the apparatus being for evaluating recognition accuracy of an image recognition apparatus performing image segmentation, the apparatus comprising:
an input/output unit configured to input an input image to the image recognition apparatus and obtain an output image generated by the image recognition apparatus; and
a controller configured to perform image processing on the input image to be input to the image recognition apparatus, generate a plurality of processed input images, input the generated plurality of processed input images to the image recognition apparatus, obtain a plurality of the output images classified into classes by image segmentation being performed by the image recognition apparatus, and calculate a variance value of each of the plurality of output images, based on the obtained plurality of output images.

7. An evaluation system comprising:
the evaluation apparatus according to claim 6; and
the image recognition apparatus configured to perform image segmentation on the plurality of processed input images input from the evaluation apparatus, and output the plurality of output images classified into classes to the evaluation apparatus.
